Europäisches Patentamt

(19) **European Patent Office**

Office européen des brevets

(11) Veröffentlichungsnummer: **0 057 276 B1**

(12) **EUROPÄISCHE PATENTSCHRIFT**

(45) Veröffentlichungstag der Patentschrift: **10.10.84**

(51) Int. Cl.³: **F 24 D 3/00**

(21) Anmeldenummer: **81110128.6**

(22) Anmeldetag: **04.12.81**

(54) **Baueinheit zum Aufbau einer Raumheizungs- bzw. -kühlungsanlage.**

(30) Priorität: **29.01.81 CH 568/81**

(43) Veröffentlichungstag der Anmeldung:
**11.08.82 Patentblatt 82/32**

(45) Bekanntmachung des Hinweises auf die Patenterteilung:
**10.10.84 Patentblatt 84/41**

(84) Benannte Vertragsstaaten:
**AT BE DE FR GB NL SE**

(56) Entgegenhaltungen:
**CH - A - 170 711
CH - A - 508 795
FR - A - 1 046 905
FR - A - 1 100 706
GB - A - 806 503**

(73) Patentinhaber: **Deria-Destra AG für Strahlungswärme,
Höhestrasse 40 Postfach, CH-8702 Zollikon-Dorf (CH)**

(72) Erfinder: **Pfister, Jürg, Höhestrasse 40, CH-8702 Zollikon
(CH)**

(74) Vertreter: **Sax, Walter F., Rauchackerstrasse 28,
CH-8102 Oberengstringen (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung betrifft eine Baueinheit zum Aufbau einer Raumheizungs- bzw. -kühlungsanlage, mit einem Schalkörper zur Bildung von Hohlräumen in raumbegrenzenden Bauteilen für die Unterbringung von auf Heiz- bzw. Kühlrohre klemmend aufsetzbaren Wärmeleitblechen, wobei der zur Auflage auf einen tragenden Bauteil bestimmte, aus Leichtbaustoff geformte Schalkörper durch Stützrippen abgeteilte Hohlräume zur Aufnahme der Wärmeleitbleche und Ausnehmungen in den Stützrippen für wenigstens ein quer zu denselben verlaufenden Heiz- bzw. Kühlrohr aufweist.

Es sind Boden- und Deckenheizungen bekannt, bei denen der Einbau der Heizungselemente in die Boden- bzw. Deckenkonstruktion in der Weise vorgenommen wird, daß auf einem tragfähigen Bauteil, z. B. auf einer Betondecke oder auf einer aus an Fertigträgern aufgehängten Schalensteinen gebildeten Decke, die Heizrohre mit den aufgeklemmten Wärmeleitblechen angeordnet und danach diese Heizungselemente durch eine verlorene Schalung zur Bildung der erforderlichen Hohlräume abgedeckt werden, worauf der Betonboden vergossen wird.

Beim Aufbau einer Raumheizungs- bzw. -kühlungsanlage unter Verwendung von Schalkörpern der eingangs genannten und in der Schweizer Patentschrift Nr. 508 795 näher beschriebenen Art bilden das Aufsetzen der Wärmeleitbleche auf die Heiz- bzw. Kühlrohre und das Verlegen der Schalkörper zwei getrennte Arbeitsgänge. Zuerst werden die Wärmeleitbleche auf die Rohre aufgesetzt, wobei ein bestimmter Abstand zwischen den auf einem Rohr befindlichen Wärmeleitblechen einzuhalten ist, damit die Anordnung der Wärmeleitbleche mit derjenigen der Hohlräume im Schalkörper übereinstimmt. Danach werden die Schalkörper aufgelegt und an den Rohren befestigt. Diese Befestigung ist notwendig zur Niederhaltung der Schalkörper gegen den Druck der nach oben vorgespannten Wärmeleitbleche.

Die Erfindung bezweckt eine Vereinfachung und Verbilligung der Montage einer derartigen Raumheizungs- bzw -kühlungsanlage.

Bei der erfindungsgemäßen Baueinheit sind die Wärmeleitbleche im Schalkörper lose gehalten, so daß sie beim Verlegen des Schalkörpers zwangsläufig auf das Heiz- bzw. Kühlrohr aufgesetzt werden.

Damit entfällt der separate, das Aufsetzen und Ausrichten der Wärmeleitbleche umfassende Arbeitsgang. Außerdem kann normalerweise auf eine Befestigung der Schalkörper an den Rohren verzichtet werden, da bei montierter Baueinheit die Vorspannung der Wärmeleitbleche infolge der Halterung derselben im Schalkörper keine wesentliche Lageveränderung der Schalkörper herbeiführen kann.

Vorteilhafte Weiterbildungen der Erfindung sind in den abhängigen Ansprüchen beschrieben.

Das Verlegen der erfindungsgemäßen Baueinheiten gestaltet sich sehr einfach und erfordert wenig Zeitaufwand. Das Zusammenfügen von Wärmeleitblechen und Schalkörpern wird von der Baustelle in die Fabrik verlegt, wo das Einsetzen der Wärmeleitbleche in die Schalkörper maschinell erfolgen kann.

In der Zeichnung sind Ausführungsbeispiele der Erfindung dargestellt, und zwar zeigt

Fig. 1 Ansicht einer Baueinheit mit zum Teil mit Wärmeleitblechen bestücktem Schalkörper von unten;

Fig. 2 Seitenansicht des leeren Schalkörpers nach Fig. 1;

Fig. 3 Querschnitt nach der Linie III-III in Fig. 1 in größerem Maßstab;

Fig. 4 Querschnitt einer geänderten Ausführungsform der Baueinheit, ausgerüstet mit einem Wärmeleitblech pro Hohlraum;

Fig. 5 Querschnitt einer weiteren Ausführungsform der Baueinheit, ausgerüstet mit zwei kleineren Wärmeleitblechen pro Hohlraum; und

Fig. 6 perspektivische Ansicht eines Halteorgans.

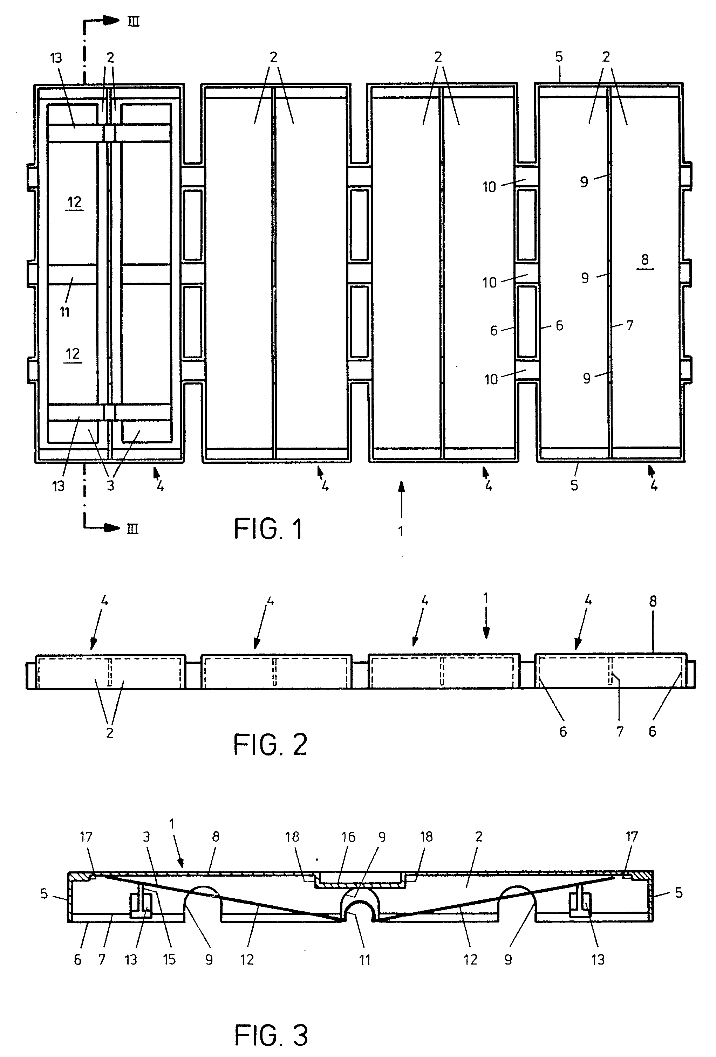

Nach dem in den Fig. 1 bis 3 dargestellten Ausführungsbeispiel besitzt der aus Leichtbaustoff, z. B. aus Kunststoff oder Kunstholz geformte Schalkörper 1 acht durch Stützrippen abgeteilte Hohlräume 2 zur Aufnahme von Wärmeleitblechen 3. Diese Hohlräume 2 werden durch vier nebeneinander angeordnete, unter sich zusammenhängende, gleiche Schalen 4 gebildet, die je aus Längs- und Querwänden 5 bzw. 6, einer Zwischenrippe 7 und einer Deckwand 8 bestehen, welche die Hohlräume 2 nach der Seite und nach oben abschließen. In den als Stützrippen dienenden Querwänden 6 und Zwischenrippen 7 sind Ausnehmungen 9 für je ein quer zu denselben verlaufendes Heiz- bzw. Kühlrohr (nicht dargestellt) vorgesehen. Je nach den vorkommenden Rohrabständen kommt entweder ein Rohr in die mittlere oder kommen zwei Rohre in die beiden äußeren der Ausnehmungen 9 zu liegen. Die Querwände 6 benachbarter Schalen 4 sind an den Ausnehmungen 9 je durch einen Tunnel 10 miteinander verbunden. Zusätzlich können die Schalen 4 durch an der Unterseite dieser Querwände vorgesehene Fußstege (nicht dargestellt) miteinander verbunden sein, insbesondere bei einer Ausführungsform, die Schalen mit je nur einem Verbindungstunnel aufweist. In der Praxis sind die Längs- und Querwände 5, 6 mit Rücksicht auf die Herstellungstechnik nach außen geneigt, was in der Zeichnung nicht zum Ausdruck kommt. Der Schalkörper 1 der Baueinheit kann eine von vier abweichende Anzahl von Schalen 4 aufweisen. Bei Bedarf kann die Baueinheit z. B. auf der Baustelle durch Abtrennen einzelner Schalen verkürzt werden.

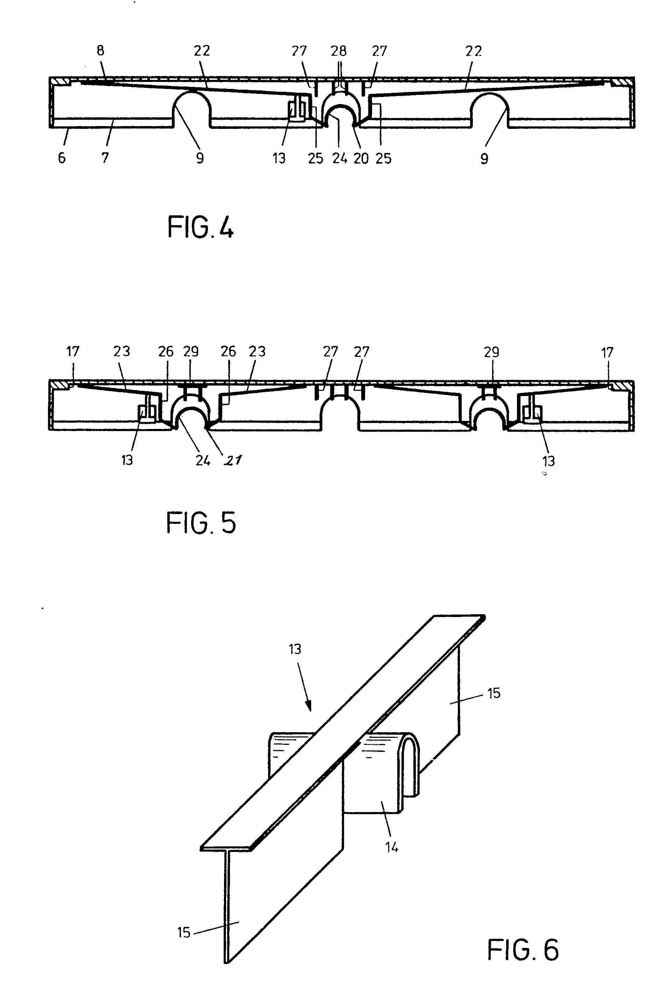

Die Wärmeleitbleche 3, welche aus einer das Heiz- bzw. Kühlrohr teilweise zu umklammern bestimmten Klemmhülse 11 und beidseitig von dieser ausgehenden Lamellen 12 bestehen, sind im Schalkörper 1 lose gehalten, so daß sie beim Verlegen des Schalkörpers zwangsläufig auf das Heiz- bzw. Kühlrohr aufgesetzt werden. Zu diesem Zweck sind Halteorgane 13 vorgesehen, welche im Lamellenbereich der Wärmeleitbleche 3 wirksam sind und letztere am Herausfallen hindern. In Fig. 6 ist eine mögliche Ausführungsform dieser Halteorgane 13 dargestellt. Sie besitzen ein U-förmiges Klemmstück 14, von dem nach beiden Seiten gerichtete Haltestege 15 ausgehen. Nach der Fig. 1 sind die Halteorgane 13 mit dem Klemmstück 14 auf die Zwischenrippen 7 aufgesetzt, wobei sich die Haltestege 15 quer über je eine Lamelle 12 der Wärmeleitbleche 3 erstrecken.

In der Mitte jedes Hohlraumes 2 ist eine die Klemmhülse 11 der Wärmeleitbleche 3 beim Verlegen der Baueinheit nach oben abstützende Auflage vorgesehen, die im vorliegenden Beispiel durch einen von der Deckwand 8 abgesetzten Wandteil 16 gebildet wird. Diese Auflage kann auch in anderer Weise ausgebildet und angeformt oder angesetzt sein.

Die Wärmeleitbleche 3 sind mit Rücksicht auf Wärmedehnungen und Maßtoleranzen in Längsrichtung der Lamellen 12 in gewissen Grenzen beweglich gehalten. Zur Begrenzung dieser Beweglichkeit sind an den freien Lamellenenden wirksame Anschläge 17 vorgesehen, welche so angeordnet sind, daß sich die Klemmhülse 11 der Wärmeleitbleche 3 seitlich nicht über den Rand der betreffenden Ausnehmung 9 hinaus bewegen kann.

Wenn in einer anderen Ausführungsform der Baueinheit die beiden äußeren Ausnehmungen 9 des Schalkörpers 1 bestimmt sind, Heiz- bzw. Kühlrohre aufzunehmen, dann sind in die Hohlräume 2 je zwei kleinere Wärmeleitbleche, d. h. solche mit kürzeren Lamellen, anstelle der Wärmeleitbleche 3 eingesetzt. Zur Begrenzung der Beweglichkeit dieser kleineren Wärmeleitbleche in Längsrichtung der Lamellen dienen in diesem Fall außer den Anschlägen 17 noch die durch den als Auflage nicht benutzten Wandteil 16 gebildeten Absätze 18. Als oberseitige Stütze für die Klemmhülsen der beiden Wärmeleitbleche dienen auf die äußeren Ausnehmungen 9 ausgerichtete Auflagen (nicht dargestellt in Fig. 3), die in später beschriebener Weise an der Deckwand 8 angesetzt sind. Zur Halterung der kleineren Wärmeleitbleche können gleiche oder ähnliche Halteorgane wie im Falle der größeren Wärmeleitbleche 3 vorgesehen sein.

Bei den Ausführungsformen nach den Fig. 4 und 5 sind Wärmeleitbleche 20 bzw. 21 mit langen bzw. kurzen Lamellen vorgesehen, bei denen die Lamellen je einen ebenen, an der Deckwand 8 des Schalkörpers anzuliegen bestimmten Abschnitt 22 bzw. 23 und zwischen diesem und ihrer Ansatzstelle an der Klemmhülse 24 einen zur Deckwand 8 wenigstens annähernd vertikal verlaufenden Abschnitt 25 bzw. 26 aufweisen.

Im Beispiel nach Fig. 4 dienen an der Deckwand 8 der Schalen angeformte Ansätze 27, die mit den genannten Vertikalabschnitten 25 der Wärmeleitbleche 20 zusammenwirken, als Begrenzung ihrer Beweglichkeit in Längsrichtung der Lamellen. Die Auflage für die Klemmhülse 24 bilden zwei an der Deckwand 8 angeformte Rippen 28, die bei geeignetem gegenseitigen Abstand eine Zentrierwirkung auf die Baueinheit haben, wenn die Klemmhülse 24 beim Verlegen der Baueinheit gegen diese Rippen 28 gedrückt wird. Es können aber auch mehr als zwei Rippen als Auflage vorgesehen sein. In dieser Ausführungsform genügt ein einziges Halteorgan 13 gemäß Fig. 6 oder einer funktionell entsprechenden Konstruktion, das nahe des einen oder anderen Vertikalabschnitts 25 der Lamellen an der Zwischenrippe 7 oder in anderer geeigneter Weise am Schalkörper angesetzt ist, zur Halterung des Wärmeleitbleches 20.

Der gleiche Schalkörper nach Fig. 4 kann bei der Ausführungsform nach Fig. 5 zur Aufnahme zweier kleinerer Wärmeleitbleche 21 pro Hohlraum eingerichtet sein. Zusätzlich sind lediglich zwei auf die äußeren beiden Ausnehmungen 9 ausgerichtete Auflagen 29 an der Deckwand 8 des Schalkörpers angesetzt, die ebenfalls zwei oder mehr Rippen aufweisen oder in anderer Weise ausgebildet sein können. Die Halteorgane 13 sind in bezug auf die Wärmeleitbleche 21 in gleicher Weise angeordnet wie bei der Ausführungsform nach Fig. 4. Als Begrenzungsanschläge dienen die an den Lamellenenden wirksamen Anschläge 17 und Ansätze 27, die wiederum so angeordnet sind, daß sie die im Zusammenhang mit der Ausführungsform nach den Fig. 1 bis 3 angegebene Funktion erfüllen. Es können auch mit den Vertikalabschnitten 26 der Lamellen zusammenwirkende Anschlagrippen (ähnlich den Ansätzen 27 in Fig. 4) vorgesehen sein, die zusammen mit der Auflage 29 ein gemeinsames, an der Deckwand des Schalkörpers angesetztes Bauteil bilden können.

Die nicht am Schalkörper angeformten, sondern an diesen angesetzten Teile können, wie z. B. für die Halteorgane 13 angegeben, durch Klemmwirkung, oder aber durch Verleimung oder mit einer Art Druckknopfverbindung an Teilen des Schalkörpers fixiert sein.

Wie eingangs erwähnt, ist eine zusätzliche Befestigung der beschriebenen Baueinheit an den Heiz- bzw. Kühlrohren allgemein nicht erforderlich. Sollte sich unter extremen Bedingungen trotzdem die Notwendigkeit einer solchen Befestigung ergeben, so können dafür federnde Drahtklammern vorgesehen sein, welche mit einem Schenkel das Heiz- bzw. Kühlrohr zu untergreifen und mit einem zweiten Federschenkel den Verbindungstunnel zwischen den Schalen oder die Tunnelstücke an den Enden der äußeren Schalen der Baueinheit zu übergreifen bestimmt sind.

## Patentansprüche

1. Baueinheit zum Aufbau einer Raumheizungs- bzw. -kühlungsanlage, mit einem Schalkörper (1) zur Bildung von Hohlräumen in raumbegrenzenden Bauteilen für die Unterbringung von auf Heiz- bzw. Kühlrohre klemmend aufsetzbaren Wärmeleitblechen (3; 20; 21), wobei der zur Auflage auf einen tragenden Bauteil bestimmte, aus Leichtbaustoff geformte Schalkörper durch Stützrippen (6, 7) abgeteilte Hohlräume (2) zur Aufnahme der Wärmeleitbleche und Ausnehmungen (9) in den Stützrippen für wenigstens ein quer zu denselben verlaufendes Heiz- bzw. Kühlrohr aufweist, dadurch gekennzeichnet, daß die Wärmeleitbleche (3; 20; 21) im Schalkörper (1) lose gehalten sind, so daß sie beim Verlegen des Schalkörpers zwangsläufig auf das Heiz- bzw. Kühlrohr aufgesetzt werden.

2. Baueinheit nach Anspruch 1, mit Wärmeleitblechen (3; 20; 21), die aus einer das Heiz- bzw. Kühlrohr teilweise umklammernden Klemmhülse (11; 24) und beidseitig von dieser ausgehenden Lamellen (12; 22, 25; 23, 26) bestehen, dadurch gekennzeichnet, daß am Schalkörper (1) für jedes Wärmeleitblech eine deren Klemmhülse nach oben abstützende Auflage (16; 28; 29), zwei die Beweglichkeit des Wärmeleitbleches in Längsrichtung der Lamellen begrenzende Anschläge (17, 18; 17, 27) und wenigstens ein das Wärmeleitblech am Herausfallen hinderndes, im Lamellenbereich desselben wirksames Halteorgan (13) vorgesehen sind.

3. Baueinheit nach Anspruch 2, dadurch gekennzeichnet, daß Auflage, Anschläge und Halteorgan wenigstens zum Teil am Schalkörper angeformt und im übrigen an Teile des Schalkörpers angesetzt sind.

4. Baueinheit nach Anspruch 3, bei dem der Schalkörper zur wahlweisen Bestückung jedes seiner Hohlräume (2) mit einem größeren Wärmeleitblech (20) oder mit mehreren kleineren, in Längsrichtung der Lamellen nebeneinander liegenden Wärmeleitblechen (21) eingerichtet ist, dadurch gekennzeichnet, daß alle benötigten Anschläge (17; 27) und die Auflage (28) für das größere Wärmeleitblech am Schalkörper (1) angeformt sind, während die Auflagen (29) für die kleineren Wärmeleitbleche und jedes Halteorgan (13) an Teile (7) des Schalkörpers angesetzt sind (Fig. 4, 5).

5. Baueinheit nach Anspruch 2, dadurch gekennzeichnet, daß die Anschläge (17) an den freien Lamellenenden wirksam sind.

6. Baueinheit nach Anspruch 2, dadurch gekennzeichnet, daß die Lamellen der Wärmeleitbleche (20, 21) je einen ebenen, an der Deckwand (8) des Schalkörpers (1) anliegenden Abschnitt (22; 23) und zwischen diesem und ihrer Ansatzstelle an der Klemmhülse (24) einen zur Deckwand wenigstens annähernd vertikal verlaufenden Abschnitt (25; 26) aufweisen (Fig. 4, 5).

7. Baueinheit nach Anspruch 6, dadurch gekennzeichnet, daß die Anschläge (27) am Vertikalabschnitt der Lamellen wirksam sind (Fig. 4).

8. Baueinheit nach Anspruch 6, dadurch gekennzeichnet, daß ein am ebenen Lamellenabschnitt (22; 23) wirksames Halteorgan nahe des einen oder anderen Vertikalabschnitts (25; 26) der Lamellen am Schalkörper (1) angesetzt ist.

9. Baueinheit nach Anspruch 7, dadurch gekennzeichnet, daß Auflage und Anschläge ein gemeinsames, an der Deckwand des Schalkörpers angesetztes Bauteil bilden.

10. Baueinheit nach Anspruch 2, dadurch gekennzeichnet, daß die Auflage durch eine Ausbuchtung (16) in der Deckwand (8) des Schalkörpers (1) oder in einem an dieser angesetzten Teil gebildet wird (Fig. 1).

11. Baueinheit nach Anspruch 2, dadurch gekennzeichnet, daß die Auflage durch wenigstens zwei von der Deckwand (8) des Schalkörpers (1) oder von einem an dieser angesetzten Teil (29) ausgehende parallele Rippen (28) gebildet wird (Fig. 4, 5).

12. Baueinheit nach Anspruch 2, dadurch gekennzeichnet, daß das Halteorgan (13) auf eine Stützrippe (7) klemmend aufgesetzt ist und wenigstens einen Haltesteg (15) aufweist, der sich quer über eine Lamelle (12) des Wärmeleitbleches (3) erstreckt.

13. Baueinheit nach Anspruch 1, dadurch gekennzeichnet, daß der Schalkörper (1) aus nebeneinander angeordneten, unter sich zusammenhängenden Schalen (4) besteht, wobei die als Stützrippen dienenden Querwände (6) benachbarter Schalen je durch einen Fußsteg und/oder durch einen Tunnel (10) an den Ausnehmungen (9) für das Heiz- bzw. Kühlrohr miteinander verbunden sind.

14. Baueinheit nach Anspruch 13, dadurch gekennzeichnet, daß an jedem Tunnel (10) fixierbare Drahtklammern zur Befestigung des Schalkörpers (1) am Heiz- bzw. Kühlrohr vorgesehen sind.

15. Baueinheit nach Anspruch 13, dadurch gekennzeichnet, daß jede Schale (4) des Schalkörpers (1) wenigstens zwei durch eine Zwischenrippe (7) abgeteilte Hohlräume (2) zur Aufnahme der Wärmeleitbleche (3) aufweist.

16. Baueinheit nach den Ansprüchen 12 und 15, dadurch gekennzeichnet, daß das Halteorgan (13) auf die Zwischenrippe (7) klemmend aufgesetzt ist und beidseitig je einen Haltesteg (15) aufweist (Fig. 6).

**Claims**

1. Constructional unit for building up a room heating or cooling plant, with a casing body (1) for the formation of spaces in room-bounding constructional parts for receiving heat-conducting sheets (3; 20; 21) to be mounted by damping upon heating respectively cooling tubes whereby the casing body intended for resting on a supporting constructional part and formed from light building material comprises spaces (2) separately by reinforcing ribs (6, 7) for receiving the heat conducting sheets and cutouts (9) in the reinforcing ribs for at least on heating respectively cooling tube running transversely to them, characterized in that the heat conducting sheets (3; 20; 21) are loosely retained in the casing body so that they are forcingly set onto the heating respectively cooling tube upon mounting the casing body.

2. Constructional unit according to claim 1, with heat conducting sheet (3; 20; 21) consisting of a clamping shell (11, 24) partially surrounding the heating respectively cooling tube and of fins (12; 22, 25; 26) radiating on both sides from said shell, characterized in that on the casing body (1) there are provided for each heat conducting sheet a support (16; 28; 29) bearing its clamping shell on the upper side, two stops (17, 18; 17, 27) limiting a possible movement of the heat conducting sheet in the longitudinal direction of the fins and at least one retaining device (13) preventing the heat conducting sheet from falling out and acting within the region of its fins.

3. Constructional unit according to claim 2, characterized in that the support, the stops and the retaining device or at least partially formed as parts of the casing body and for the remainder attached to parts of the casing body.

4. Constructional unit according to claim 3, whereby the casing body is provided for each of its spaces becoming selectively equipped with a larger heat conducting sheet (20) or with several smaller heat conducting sheets (21) being side by side in the longitudinal direction of the fins, characterized in that all requierd stops (17, 27) as well as the support (28) for the larger heat conducting sheet are formed as parts of the casing body (1) whereas the supports (29) for the smaller heat conducting sheets and each retaining device (13) are attached to parts (7) of the casing body (Figs. 4, 5).

5. Constructional unit according to claim 2, characterized in that the stops (17) are acting upon the free ends of the fins.

6. Constructional unit according to claim 2, characterized in that the fins of the heat conducting sheets (20, 21) comprise each a level portion (22, 23) contacting the cover (8) of the casing body and, between said portion and their roof on the clamping shell (24), a portion (25, 26) running at least substantially vertically to said cover (Figs. 4, 5).

7. Constructional unit according to claim 6, characterized in that the stops (27) are acting upon the vertical portion of the fins (Fig. 4).

8. Constructional unit according to claim 6, characterized in that a retaining device acting on the lover portion (22, 23) is attached to the casing body (1) in the vicinity of one or the other of the vertical portions (25, 26) of the fins.

9. Constructional unit according to claim 7, characterized in that support and stops form a unitary constructional part attached to the cover of the casing body.

10. Constructional unit according to claim 2, characterized in that the support is formed by a recess (16) in the cover (8) of the casing body (1) or in one of the parts attached to said cover (Fig. 1).

11. Constructional unit according to claim 2, characterized in that the support is formed by at least two parallel ribs (28) radiating from the cover (8) of the casing body or form a part (29) attached to said cover.

12. Constructional unit according to claim 2, characterized in that the retaining device (13) is set by clamping on a reinforcing rib (7) and comprises at least one supporting web (15) which extends across a fin (12) of the heat conducting sheet.

13. Constructional unit according to claim 1, characterized in that the casing body is composed of casing (4) disposed side by side and being connected with each other, whereby the transversal walls (6) of adjacent casings which serve as reinforcing ribs are connected with each other by means of a walkway and/or a tunnel (10) on the cutouts for the heating respectively the cooling tube.

14. Constructional unit according to claim 13, characterized in that wire clips are provided which can be fixed onto the tunnel (10) for attaching the casing body (1) to the heating respectively the cooling tube.

15. Constructional unit according to claim 13, characterized in that each casing (4) of the casing body (1) comprises two spaces (2) separated by an intermediate rib (7) for receiving the heat conducting sheets (3).

16. Constructional unit according to claim 12 and 15, characterized in that the retaining device (13) is set by clamping onto the intermediate rib (7) and has on each side of the latter a supporting web (15) (Fig. 6).

**Revendications**

1. Unité de construction pour la réalisation d'une installation de chauffage ou de refroidissement de locaux, comprenant une pièce de coffrage pour former des cavités dans des parties de bâtiment délimitant des locaux, en vue de la disposition, dans ces cavités, de tôles conductrices de chaleur (3; 20; 21) susceptibles d'être disposées avec serrage sur des tubes de chauffage ou de refroidissement, la pièce de coffrage, faite d'un matériau de construction léger et destinée à être posée sur un élément de construction porteur, présentant des cavités (2) séparées par des nervures-supports (6, 7) pour la réception des tôles conductrices de chaleur, de même que des évidements (9) ménagés dans les nervures pour au moins un tube de chauffage ou de refroidissement s'étendant transversalement aux nervures, caractérisée en ce que les tôles conductrices de chaleur (3; 20; 21) sont tenues librement dans la pièce de coffrage (1), de manière que, lors de la pose de la pièce de coffrage, elles se placent automatiquement sur le tube de chauffage ou de refroidissement.

2. Unité selon la revendication 1 et comprenant des tôles conductrices de chaleur (3; 20; 21) qui sont constituées d'une douille de serrage (11, 21) destinée à enserrer partiellement le tube de chauffage ou de refroidissement et d'ailettes (12; 22, 25; 23, 26) s'étendant à partir des deux côtés de cette douille, caractérisée en ce que la pièce de coffrage (1) est pourvue, pour chaque tôle conductrice de chaleur, d'un appui (16; 28; 29) pour appuyer en haut la douille de serrage de la tôle, de deux butées (17, 18; 17, 27) limitant la mobilité de la tôle dans le sens de la longueur des ailettes et d'au moins un organe de maintien (13) qui agit sur au moins une ailette de la tôle et empêche celle-ci de tomber de la pièce de coffrage.

3. Unité selon la revendication 2, caractérisée en ce que l'appui, les butées et l'organe de maintien sont en partie au moins formés sur la pièce de coffrage et sont fixés pour le reste à des portions de la pièce de coffrage.

4. Unité selon la revendication 3 et dont la pièce de coffrage est agencée pour la disposition, dans chacune de ses cavités, au choix, d'une tôle conductrice de chaleur (20) relativement grande ou de plusieurs tôles conductrices de chaleur (21) plus petites et placées l'une à côté de l'autre dans le sens de la longueur des ailettes, caractérisée en ce que toutes les butées (17; 27) nécessaires et l'auppui (28) pour la tôle relativement grande sont formées sur la pièce de coffrage (1), tandis que les appuis (29) pour les tôles plus petites et chaque organe de maintien (13) sont fixés à des portions (7) de la pièce de coffrage (figures 4, 5).

5. Unité selon la revendication 2, caractérisée en ce que les butées (17) agissent sur les extrémités libres des ailettes.

6. Unité selon la revendication 2, caractérisée en ce que les ailettes des tôles conductrices de chaleur (20, 21) présentent chacune une portion plane (22; 23) destinée à s'appliquer contre le dessus (8) de la pièce de coffrage (1)et, entre cette portion plane et son point de raccordement à la douille de serrage (24), une portion (25; 26) au moins à peu près verticale ou perpendiculaire au dessus de la pièce de coffrage (figures 4, 5).

7. Unité selon la revendication 6, caractérisée en ce que les butées (27) agissent sur la portion verticale des ailettes.

8. Unité selon la revendication 6, caractérisée en ce que l'organe de maintien agissant sur une portion d'ailette plane (22; 23) est disposé sur la pièce de coffrage (1) près de l'une ou de l'autre portion verticale (25; 26) des ailettes.

9. Unité selon la revendication 7, caractérisée en ce que l'appui et les butées forment un élément commun disposé sur le dessus de la pièce de coffrage.

10. Unité selon la revendication 2, caractérisée en ce que l'appui est formé par un renflement (16) du dessus (8) de la pièce de coffrage (1) ou dans une pièce disposée sur ce dessus (figure 1).

11. Unité selon la revendication 2, caractérisée en ce que l'appui est formé par au moins deux nervures parallèles (28) qui partent du dessus (8) de la pièce de coffrage (1) ou d'une pièce (29) disposée sur ce dessus (figures 4, 5).

12. Unité selon la revendication 2, caractérisée en ce que l'organe de maintien (13) est disposé avec serrage sur une nervure-support (7) et possède au moins une aile de maintien (15) s'étendant transversalement sur une ailette (12) de la tôle conductrice de chaleur (3).

13. Unité selon la revendication 1, caractérisée en ce que la pièce de coffrage (1) est composée de coques (4) juxtaposées et d'un seul tenant, les parois transversales (6) de coques voisines, servant de nervures-supports, étant reliées entre elles par une portion de liaison à la base et/ou par un tunnel (10) sur les évidements (9) pour le tube de chauffage ou de refroidissement.

14. Unité selon la revendication 13, caractérisée en ce que des agrafes en fil sont prévues sur chaque tunnel (10) pour la fixation de la pièce de coffrage (1) au tube de chauffage ou de refroidissement.

15. Unité selon la revendication 13, caractérisée en ce que chaque coque (4) de la pièce de coffrage (1) présente au moins deux cavités (2) séparées par une nervure intermédiaire (7) pour la réception des tôles conductrices de chaleur (3).

16. Unité selon les revendications 12 et 15, caractérisée en ce que l'organe de maintien (13) est disposé avec serrage sur la nervure intermédiaire (7) et possède une aile de maintien (15) sur chacun de ses deux côtés (figure 6).

FIG. 1

FIG. 2

FIG. 3

FIG. 4

FIG. 5

FIG. 6